# FASCICULE DE BREVET EUROPEEN

(11) **EP 3 495 136 B1**
(45) Date de publication et mention de la délivrance du brevet: **29.07.2020**
(21) Numéro de dépôt: 18209883.0
(22) Date de dépôt: 03.12.2018
(51) Int. Cl.: B32B 5/02, B32B 27/06, B32B 27/08, B32B 27/12, B32B 27/28, B32B 27/30, B32B 27/36

(54) **STRUCTURE MULTICOUCHE POUR LA REALISATION D'UN REVETEMENT DE SOL ECONOMIQUE, ET PROCEDE DE FABRICATION D'UNE TELLE STRUCTURE MULTICOUCHE**
MEHRSCHICHTIGE STRUKTUR FÜR DIE AUSFÜHRUNG EINES PREISGÜNSTIGEN BODENBELAGS, UND HERSTELLUNGSVERFAHREN EINER SOLCHEN MEHRSCHICHTIGEN STRUKTUR
MULTILAYER STRUCTURE FOR FORMING AN ECONOMICAL FLOOR COVERING, AND METHOD FOR PRODUCING SUCH A MULTILAYER STRUCTURE

(30) Priorité: 05.12.2017 FR 1761669
(43) Date de publication de la demande: 12.06.2019
(73) Titulaire: GERFLOR, 69100 Villeurbanne (FR)
(72) Inventeur: DURAND, Sylvain, 26130 SAINT-PAUL-TROIS-CHATEAUX (FR)
(74) Mandataire: Cabinet Laurent & Charras

(56) Documents cités:
- EP-A1- 2 727 725
- EP-A1- 3 064 347
- FR-A1- 2 761 295

## Description

### DOMAINE TECHNIQUE

La présente invention concerne une structure multicouche et son procédé de fabrication, pour la réalisation d'un revêtement de sol dit « économique ».

### ART ANTERIEUR

Il est connu de l'état de la technique une structure multicouche comprenant une couche supérieure d'usure composée au moins de polychlorure de vinyle (PVC), et une couche d'envers, moussée ou compacte, réalisée par exemple à partir de PVC.

Ce type de revêtement de sol est dit économique à produire si la couche d'usure et la couche d'envers sont obtenues par enduction, si la structure multicouche comprend un minimum de couches, et si le décor est directement imprimé en envers de la couche d'usure.

Afin d'améliorer la stabilité dimensionnelle du revêtement de sol, il est connu que la structure multicouche comprenne un voile de verre enduit d'un plastisol PVC gélifié sur ses deux faces, disposé entre la couche d'usure et la couche d'envers. La face du voile de verre en contact avec la couche d'usure est imprimée par héliogravure.

Afin que le revêtement de sol présente des propriétés barrières aux remontées de substances présentes dans le sol recouvert, il est connu d'intégrer un film en Polytéréphtalate d'éthylène (PET) dans la structure multicouche.

Des structures multicouches pour la réalisation d'un revêtement de sol sont illustrés dans les documents de l'art antérieur publiés sous les numéros EP 2 727 725, EP 3 064 347, FR 2 761 295, EP 3 106 301 et US 2002/0150779.

Cependant, dans les structures multicouches de l'état de la technique, la qualité du décor imprimé est mauvaise car le voile de verre enduit d'un plastisol PVC gélifié présente un état de surface poreux et irrégulier. Ainsi, l'encre déposée pénètre dans les porosités et s'étale. De plus, la porosité de ce voile de verre nuit aux propriétés barrières du revêtement de sol, et les substances présentes dans le sol ont tendance à remonter à la surface du revêtement de sol, créant des taches.

En outre, le revêtement de sol réalisé avec ce type de structure multicouche est très sensible à l'usure et aux rayures car sa couche d'usure présente une épaisseur relativement faible pour rester économique, notamment inférieure à 100 µm.

Enfin, ce type de structure multicouche est relativement complexe et couteuse à fabriquer car les couches s'additionnent pour présenter toutes les propriétés énumérées ci-avant, et perd également en stabilité dimensionnelle.

### EXPOSE DE L'INVENTION

L'un des buts de l'invention est donc de proposer une structure multicouche pour la réalisation d'un revêtement imprimé, stable et économique, tout en présentant des propriétés barrières aux remontées de substances présentes dans le sol recouvert.

A cet effet, il est proposé une structure multicouche pour la réalisation d'un revêtement de sol, ladite structure multicouche comprenant une couche supérieure d'usure transparente, et une couche d'envers en polymère, et un film polymère imprimée, disposé entre la couche d'usure et la couche d'envers, le film polymère imprimé présentant un module d'Young supérieur à 1,5 GPa, la couche d'usure étant réalisée à partir de polychlorure de vinyle et la couche d'envers étant une couche en polychlorure de vinyle réalisée à partir de plastisol gélifié.

La couche d'usure présente, de préférence, une épaisseur comprise entre 0,1 et 1 mm, préférentiellement entre 0,20 et 0,70 mm.

La couche d'envers est réalisée en polychlorure de vinyle, mousse ou compact, et présente de préférence une épaisseur comprise entre 0,4 et 6 mm, préférentiellement entre 0,4 et 3 mm.

Selon l'invention, la structure multicouche comprend un film polymère imprimé, disposé entre la couche d'usure et la couche d'envers, et présentant un module d'Young supérieur à 1,5 GPa.

De cette manière, la structure multicouche est simple et économique car le nombre de couches est réduit au maximum. Le film polymère est directement imprimé afin de présenter un décor et présente des propriétés barrières aux remontées de substances (migration des colles, humidité, moisissures) présentes dans le sol. Le module d'Young de 1,5 GPa permet d'avoir un film polymère résistant permettant notamment de servir de support aux couches d'usure et d'envers, tout en présentant une épaisseur faible, par exemple supérieure à 30 µm, mais de préférence comprise entre 50 µm et 300 µm. En dessous de 30 µm le film serait trop cassant et au-dessus de 300 µm la manipulation du film serait difficile ce qui entrainerait un surcoût de production.

Selon l'invention, la couche d'usure est transparente à la lumière visible de manière à ce que le décor du film polymère imprimé lié en envers de la couche d'usure puisse être visible au travers de la couche d'usure.

Le film présente d'autres avantages, il permet notamment de stabiliser la structure multicouche en y apportant plus de rigidité, ce qui permet également de résister au poinçonnement, de conserver une bonne résistance au fluage, et de favoriser l'impression numérique et d'obtenir un décor plus réaliste.

Le film polymère permet aussi d'augmenter la résistance à la déchirure de la structure multicouche, ce qui donne notamment un aspect qualitatif lors de la pose du revêtement de sol.

Le film permet également d'homogénéiser l'expansion de la couche d'envers lorsque celle-ci est une mousse de polychlorure de vinyle. Dans cette configuration, la mousse peut être directement enduite sur le film, contrairement à une expansion sur une grille de verre possédant une surface irrégulière. L'envers de la couche de mousse est alors parfaitement lisse et permet éventuellement d'imprimer un décor avec un bon rendu.

Selon des caractéristiques avantageuses, prises seules ou en combinaison, le film polymère présente une raideur supérieure à 100 N/mm, de préférence comprise entre 100 N/mm et 300 N/mm, et le module d'Young est compris entre 1,5 GPa et 5 GPa. Ces caractéristiques permettent de limiter les phénomènes d'indentation dans la couche d'envers lorsque celle-ci est notamment constituée de mousse, en permettant une meilleure répartition des contraintes et une diminution de l'effet de cisaillement sur les parois des cellules de la mousse, correspondant à la déformation perpendiculaire à la pénétration du poinçon. Le couple raideur et module d'Young est important pour améliorer la résistance au poinçonnement. Si le film polymère présente un module d'Young supérieur à 1,5 GPa mais qu'il ne présente pas une raideur suffisante, la résistance au poinçonnement ne sera pas améliorée. En dessous de 100 N/mm la raideur n'est pas suffisante pour améliorer la résistance au poinçonnement au-dessus de 300 N/mm, le film devient difficile à manipuler lors du procédé de fabrication de la structure multicouche, notamment lors du passage sur des mandrins, etc. En dessous de 1,5 GPa cela oblige à utiliser un film polymère très épais pour obtenir une raideur supérieure à 100 N/mm et au-dessus de 5 GPa cela oblige à utiliser un film polymère très fin pour obtenir une raideur inférieure à 300 N/mm. Le film polymère est généralement extrudé.

Le polymère utilisé pour le film peut notamment être choisi parmi les polymères thermoplastiques tels que le polychlorure de vinyle (PVC), le polyéthylène téréphtalate (PET), le polyméthacrylate de méthyle (PMMA), le polyéthylène téréphtalate glycol (PETG), le polysulfure de phénylène (PPS). Le polymère utilisé pour réaliser le film peut également être choisi parmi les polymères thermodurs tels que les résines époxy, les polyesters, les polyvinyl-ester, les résines phénoliques, les polyimides, les polyuréthanes réticulés. L'utilisation de polymères thermodurs est cependant plus complexe car elle nécessite l'utilisation de procédé de complexage autre que le thermocollage, par exemple le collage.

Avantageusement, le film polymère forme un complexe avec deux couches de primaire d'adhérence aux couches d'usure et d'envers, disposées de part et d'autre du film polymère.

Par exemple, les couches de primaire d'adhérence sont des couches de copolyester, présentant une épaisseur de l'ordre du micromètre, et améliorent l'adhérence du film polymère, notamment sur le polychlorure de vinyle.

D'une manière particulière, le film polymère peut former un complexe avec une armature de renfort, telle qu'un grille de renfort, un voile de verre ou un textile non-tissé, l'armature de renfort étant en contact avec la couche d'envers. Dans le cas d'une couche d'envers moussée, il est possible d'enduire la mousse directement sur la face envers du voile de verre ou du textile non-tissé et d'obtenir une véritable imprégnation de la mousse de polychlorure de vinyle et d'améliorer ainsi l'adhérence de la mousse de polychlorure de vinyle au film polymère.

Afin d'améliorer la tenue du film polymère lors du procédé de fabrication, ce dernier peut être complexé avec au moins armature de renfort, telle qu' un voile de verre, un textile non-tissé, une grille de verre ou une grille de polyester.

Avantageusement, le film polymère présente une température de transition vitreuse supérieure à 70°C. De cette manière, le film polymère est facilement manipulable durant le procédé de fabrication de la structure multicouche, notamment lorsque ce procédé comprend des étapes d'enduction.

Avantageusement, le film polymère est stabilisé thermiquement afin de diminuer le retrait du film polymère lorsqu'il est soumis à des températures supérieures à 80°C. Cette caractéristique permet d'améliorer la tenue du film lors du procédé de fabrication et d'éviter l'apparition de contraintes mécanique internes dans la structure multicouche lorsque le film polymère est lié avec les couches d'usure et d'envers. La structure multicouche ainsi obtenue présente une meilleure stabilité dimensionnelle.

L'invention concerne également un procédé de fabrication d'une telle structure multicouche, remarquable en ce qu'il consiste :
- à enduire puis gélifier l'une des couches d'usure ou d'envers sur l'une des faces d'un film polymère imprimé présentant un module d'Young supérieur à 1,5 GPa;
- à enduire puis gélifier ou à complexer l'autre des couches d'envers ou d'usure sur l'autre des faces du film polymère.

Le procédé de fabrication est simple, rapide et relativement peu onéreux. Le procédé peut avantageusement être mis en œuvre par enduction de Plastisol PVC.

### DESCRIPTION SOMMAIRE DES FIGURES

D'autres avantages et caractéristiques ressortiront mieux de la description qui va suivre, donnée à titre d'exemple non limitatif, de la structure multicouche selon l'invention, à partir des dessins annexés dans lesquels :
- la figure 1 est une représentation schématique et en coupe transversale d'un premier exemple de réalisation de la structure multicouche selon l'invention ;
- la figure 2 est une représentation schématique similaire à celle de la figure 1, illustrant un second mode de réalisation de la structure multicouche selon l'invention ;
- la figure 3 est une présentation schématique similaire à celle de la figure 1, illustrant un second mode de réalisation de la structure multicouche selon l'invention
- la figure 4 est une représentation schématique similaire à celle de la figure 1, le film polymère étant complexé entre deux couches de copolyester ;

### DESCRIPTION DETAILLEE DE L'INVENTION

L'invention concerne une structure multicouche (1) pour la réalisation d'un revêtement de sol constitué d'un minimum de couches, et relativement peu onéreux à fabriquer.

La structure multicouche (1) selon l'invention peut présenter toute forme, notamment en panneau, dalle, et de préférence en rouleau.

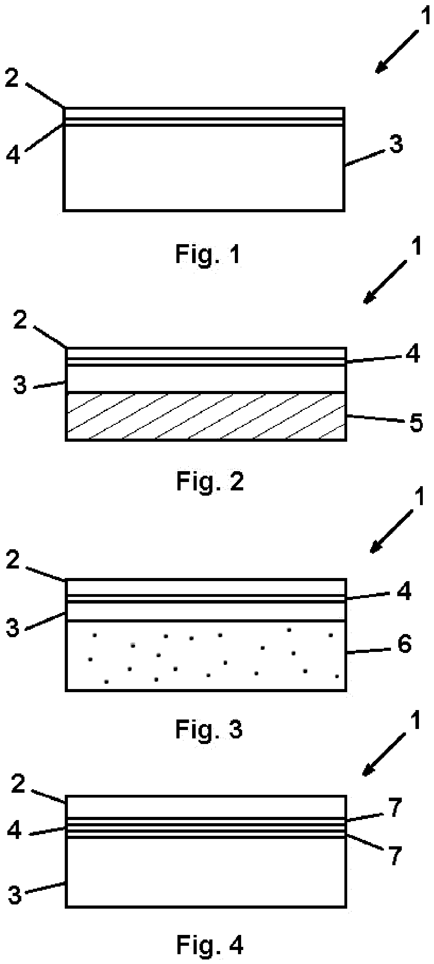

En référence aux figures 1 à 4, la structure multicouche (1) comprend une couche supérieure d'usure (2) dont les fonctions principales sont la maîtrise de la glissance, la résistance à l'usure, la facilité de nettoyage, et une couche d'envers (3) en polymère.

La couche d'usure (2), réalisée en en polychlorure de vinyle, présente une épaisseur comprise entre 0,1 et 1mm, préférentiellement entre 0,20 et 0,70 mm. La couche d'envers (3), réalisée en en polychlorure de vinyle, présente une épaisseur comprise entre 0,4 et 6 mm, préférentiellement entre 0,4 et 3 mm. Une couche d'envers (3) en mousse permet l'absorption des chocs ponctuels. Une couche d'envers (3) présentant une épaisseur comprise entre 3 et 6 mm permet notamment l'usinage de moyens d'assemblage lorsque la structure multicouche se présente sous forme de dalle ou de lame. Ces moyens d'assemblage se présentent généralement sous la forme de profils complémentaires usinés sur les bords des lames ou des dalles afin de permettre leur assemblage sans colle.

La couche d'usure (2) peut être constituée par une couche calandrée ou extrudée transparente.

La couche d'envers (3) peut être compacte, ou moussée. Elle peut être obtenue par tout procédé bien connu de l'homme du métier, notamment par calandrage, par pressage, par extrusion ou encore par enduction. Elle est réalisée à partir de plastisol de polychlorure de vinyle gélifié. De façon générale et d'une manière bien connue de l'homme du métier, une couche d'envers peut être obtenue à partir d'une composition comprenant du PVC, un plastifiant, des charges et éventuellement des stabilisants, lubrifiants, additifs et pigments. Alternativement, le polymère peut être remplacé partiellement par du caoutchouc, naturel ou synthétique, du linoléum ou encore du polyester.

La couche d'envers (3) est, lorsqu'il s'agit d'une couche de mousse, réalisée, par exemple, à partir de Plastisol de polychlorure de vinyle expansé et présente une densité comprise entre 0,20 et 0,50, et préférentiellement comprise entre 0,30 et 0,40.

La couche d'envers (3) en polychlorure de vinyle se présente, lorsqu'il s'agit d'une couche compacte, sous la forme d'une couche de Plastisol gélifiée non moussée.

En référence à la figure 2, cette couche d'envers (3) compacte peut être enduite sur une couche destinée à vernir en contact avec le sol, par exemple sur une couche de textile non tissée (5), notamment en polyester, ou, en référence à la figure 3, sur une couche de mousse d'enduction (6), par exemple sous la forme d'une couche de Plastisol gélifiée moussée de densité 0.40.

Selon l'invention, la structure multicouche (1) comprend un film polymère imprimé (4), disposé entre la couche d'usure (2) et la couche d'envers (3), et présentant un module d'Young supérieur à 1,5 Gpa.

Le film polymère (4) apporte une stabilité à la structure multicouche (1), tout en réalisant un effet barrière aux remontées de substances présentes dans le sol recouvert. Le film (4) directement imprimé permet réduire le nombre de couches et de rendre le revêtement de sol économique. De plus, le film imprimé (4), du fait d'un module d'Young supérieur à 1,5 GPa, permet de réaliser un support pour enduire la ou les couches d'usure (2) et d'envers (3), ce qui permet de diminuer davantage les coûts liés à la fabrication de la structure multicouche (1).

Par ailleurs, lorsque la couche d'envers (3) est constituée de mousse, le film polymère (4) permet de limiter les phénomènes d'indentation du revêtement lors du poinçonnement par une meilleure répartition des contraintes et par une diminution de l'effet de cisaillement sur les parois des cellules de la mousse, c'est-à-dire une diminution de la déformation perpendiculaire à la pénétration d'un poinçon. Le film polymère (4) permet donc de diminuer la déformation plastique maximale de la mousse, et d'améliorer le retour élastique de la structure multicouche (1) et de conserver l'absorption de chocs ponctuels.

Le polymère utilisé pour réaliser le film (4) peut être choisi parmi les polymères thermoplastiques tels que le polychlorure de vinyle, le polyéthylène téréphtalate, le polyméthacrylate de méthyle, le polyéthylène téréphtalate glycol, le polysulfure de phénylène. Le polymère utilisé pour réaliser le film (4) peut également être choisi parmi les polymères thermodurs tels que les résines époxy, les polyesters, les polyvinyl-ester, les résines phénoliques, les polyimides, les polyuréthanes réticulés. L'utilisation de polymères thermodurs est cependant plus complexe car elle nécessite l'utilisation de procédé de complexage autre que le thermocollage, tel que le collage.

Le film polymère (4) présente une épaisseur supérieure à 30 µm, et de préférence comprise entre 50 µm et 300 µm. Cette plage de valeur permet au film polymère (4) de présenter une raideur supérieure à 100 N/mm, et notamment une raideur comprise entre 100 N/mm et 300 N/mm. Une raideur supérieure à 300 N/mm, rendrait le film difficile à manipuler lors du procédé de fabrication de la structure multicouche (1), notamment lors du passage sur des mandrins, etc....

Le module d'Young du film polymère (4) est de préférence compris entre 1,5 GPa et 5 GPa. Le compromis entre épaisseur, raideur et module d'Young est important. Si le film polymère (4) présente un module d'Young supérieur à 1,5 GPa mais qu'il ne présente pas une raideur suffisante, la résistance au poinçonnement ne sera que très peu améliorée.

Le film polymère (4) permet aussi d'augmenter la résistance à la déchirure de la structure multicouche (1), ce qui donne notamment un aspect qualitatif lors de la pose du revêtement de sol. A titre d'exemple, la contrainte en traction nécessaire pour un allongement de 1% de la structure multicouche (1) est supérieure à 10 Mpa, et de préférence comprise entre 10 et 50 MPa.

La raideur et la rigidité du film polymère (4) permet également de stabiliser la structure multicouche (1) et de conserver sa résistance au fluage. La structure multicouche (1) présente une bonne stabilité thermique. A titre d'exemple, le retrait de la structure multicouche (1) selon l'invention sous une température de 150°C pendant 30 min suivi de 24 heures à température ambiante est inférieur à 1% aussi bien dans le sens transversal que longitudinal. L'utilisation d'un film polymère (4) stabilisé permet de diminuer les éventuels écarts de retrait entre le sens transversal et longitudinal de la structure multicouche (1) selon l'invention.

Etant donné que le film polymère (4) permet de diminuer la déformation plastique maximale d'une couche d'envers (3) moussée, celui-ci permet alors de diminuer la densité et l'épaisseur, et donc le poids de la couche d'envers (3) moussée, tout en restant conforme en résistance au fluage. A titre d'exemple, la présente structure multicouche vise un gain de poids de 15-30% par rapport à l'art antérieur.

A titre d'exemple non limitatif, et selon la première forme de réalisation illustrée à la figure 1, la structure multicouche (1) comprend successivement une couche d'usure (2) présentant une épaisseur de 0.15 mm, un film polymère imprimé (4) en Polytéréphtalate d'éthylène (PET) présentant une épaisseur de 0.125 mm, et une couche d'envers (3) moussée de densité 0.30 et présentant une épaisseur de 2.23 mm.

Selon une deuxième forme de réalisation illustrée à la figure 2, la structure multicouche (1) comprend successivement une couche d'usure (2) présentant une épaisseur de 0.23 mm, un film polymère imprimé (4) en PET présentant une épaisseur de 0.125 mm, une couche d'envers (3) compacte se présentant sous la forme d'une couche de plastisol gélifiée non moussée présentant une épaisseur de 0.45 mm et enduite et imprégnée sur une couche de textile (5) non tissée en polyester présentant une épaisseur de 1.96 mm.

Selon une troisième forme de réalisation illustrée à la figure 3, la structure multicouche comprend successivement une couche d'usure (2) présentant une épaisseur de 0.63 mm, un film polymère imprimé (4) en PET présentant une épaisseur de 0.125 mm ou de 0.075 mm, une couche d'envers (3) compacte se présentant sous la forme d'une couche de plastisol gélifiée non moussée de densité 1.40, présentant une épaisseur de 0.35 mm et enduite sur une couche de mousse d'enduction (6) se présentant sous la forme d'une couche de plastisol gélifiée moussée de densité 0.40 et présentant une épaisseur de 2.23 mm.

En pratique, et en référence à la figure 4, lors de la fabrication de la structure multicouche (1) selon l'invention, et pour améliorer l'accroche des couches d'usure (2) et d'envers (3) sur le film polymère (4), d'autant plus lorsqu'il s'agit d'un film (4) en PET et que les couches d'usure (2) et d'envers (3) comprennent du PVC, le film polymère (4) forme un complexe avec deux couches de primaire d'adhérence (7) aux couches d'usure (2) et d'envers (3), disposées de part et d'autre du film polymère (4).

Selon une forme de réalisation particulière le film polymère (4) est un film de PET, et les couches de primaire d'adhérence (7) sont des couches de copolyester. Les couches de copolyester présentent une épaisseur entre 1 µm et 10 µm avec une température de travail préférentielle pour avoir l'adhérence la plus forte possible. Pour améliorer davantage l'adhérence du copolyester sur la mousse de PVC, l'homme du métier saura ajuster l'épaisseur des couches de copolyester ou encore la formulation de celles-ci, afin de se rapprocher des conditions optimales de collage vis-à-vis du procédé d'enduction de la couche d'envers (3).

Il ressort de ce qui précède que l'invention fournit bien une structure multicouche (1) pour la réalisation d'un revêtement imprimé, stable et économique, tout en présentant des propriétés barrières aux remontées de substances présentes dans le sol recouvert.

Pour diminuer le coût de production d'une telle structure multicouche (1), les couches d'usure (2) et d'envers (3) peuvent être obtenues par pressage ou calandrage.

Pour diminuer davantage les coûts de production, le procédé de fabrication consiste à enduire puis gélifier l'une des couches d'usure (2) ou d'envers (3) sur l'une des faces du film polymère imprimé (4), et ensuite à enduire puis gélifier ou à complexer l'autre des couches d'envers (3) ou d'usure (2) sur l'autre face du film polymère (4).

Ainsi, dans une forme de réalisation préférée, la structure multicouche (1) comprend une couche supérieure d'usure (2) transparente enduite sur une face d'un film polymère imprimé (4) présentant un module d'Young supérieur à 1,5 GPa, et une couche d'envers (3) en polymère enduite ou complexée sur une face opposée du film (4).

## Revendications

1. Structure multicouche (1) pour la réalisation d'un revêtement de sol, ladite structure multicouche (1) comprenant une couche supérieure d'usure (2) transparente et une couche d'envers (3) en polymère, et un film polymère imprimé (4), disposé entre la couche d'usure (2) et la couche d'envers (3), ***caractérisé* en ce que** le film polymère imprimé (4) présente un module d'Young supérieur à 1,5 GPa, ***et en ce que*** la couche d'usure (2) est réalisée à partir de polychlorure de vinyle, et la couche d'envers (3) est une couche en polychlorure de vinyle réalisée à partir de plastisol gélifié.

2. Structure multicouche (1) selon la revendication 1, ***caractérisée* en ce que** le film polymère (4) présente une épaisseur comprise entre 50 µm et 300 µm.

3. Structure multicouche (1) selon la revendication 1, ***caractérisée* en ce que** le film polymère (4) présente une raideur supérieure à 100 N/mm, et de préférence comprise entre 100 N/mm et 300 N/mm.

4. Structure multicouche (1) selon la revendication 1, ***caractérisée* en ce que** le film polymère (4) présente un module d'Young compris entre 1,5 GPa et 5 GPa.

5. Structure multicouche (1) selon la revendication 1, ***caractérisée* en ce que** le film polymère (4) est un film polymère thermoplastique choisi parmi le polychlorure de vinyle, le polyéthylène téréphtalate, le polyméthacrylate de méthyle, le polyéthylène téréphtalate glycol, le polysulfure de phénylène.

6. Structure multicouche (1) selon la revendication 1, ***caractérisée* en ce que** le film polymère (4) forme un complexe avec deux couches de primaire d'adhérence (7) aux couches d'usure (2) et d'envers (3), disposées de part et d'autre du film polymère.

7. Structure multicouche (1) selon la revendication 6, ***caractérisée* en ce que** les couches de primaire d'adhérence (7) sont des couches de copolyester.

8. Structure multicouche (1) selon la revendication 1, ***caractérisée* en ce que** la couche d'usure (2) présente une épaisseur comprise entre 0,10 et 1 mm, et la couche d'envers (3) présente une épaisseur comprise entre 0,4 et 6 mm.

9. Procédé de fabrication d'une structure multicouche (1) selon la revendication 1, ***caractérisé* en ce qu'**il consiste :
- à enduire puis gélifier l'une des couches d'usure (2) ou d'envers (3) sur l'une des faces d'un film polymère imprimé (4) présentant un module d'Young supérieur à 1,5 GPa ;
- à enduire puis gélifier ou à complexer l'autre des couches d'envers (3) ou d'usure (2) sur l'autre des faces du film polymère (4).

## Patentansprüche

1. Mehrschichtstruktur (1) zur Herstellung eines Fußbodenbelags, wobei die Mehrschichtstruktur (1) eine transparente obere Nutzschicht (2) und eine polymere Trägerschicht (3) sowie einen zwischen der Nutzschicht (2) und der Trägerschicht (3) angeordneten bedruckten Polymerfilm (4) aufweist, **dadurch *gekennzeichnet,* dass** der bedruckte Polymerfilm (4) einen Elastizitätsmodul von mehr als 1,5 GPa aufweist, ***und dass*** die Nutzschicht (2) aus Polyvinylchlorid hergestellt ist und die Trägerschicht (3) eine Polyvinylchloridschicht aus geliertem Plastisol ist.

2. Mehrschichtstruktur (1) nach Anspruch 1, **dadurch *gekennzeichnet,* dass** der Polymerfilm (4) eine Dicke zwischen 50 µm und 300 µm aufweist.

3. Mehrschichtstruktur (1) nach Anspruch 1, **dadurch *gekennzeichnet,* dass** der Polymerfilm (4) eine Steifigkeit von mehr als 100 N/mm, und vorzugsweise zwischen 100 N/mm und 300 N/mm, aufweist.

4. Mehrschichtstruktur (1) nach Anspruch 1, **dadurch *gekennzeichnet,* dass** der Polymerfilm (4) einen Elastizitätsmodul zwischen 1,5 GPa und 5 GPa aufweist.

5. Mehrschichtstruktur (1) nach Anspruch 1, **dadurch *gekennzeichnet,* dass** der Polymerfilm (4) ein thermoplastischer Polymerfilm ist, ausgewählt aus Polyvinylchlorid, Polyethylenterephthalat, Polymethylmethacrylat, Polyethylenterephthalatglykol, Polyphenylensulfid.

6. Mehrschichtstruktur (1) nach Anspruch 1, **dadurch *gekennzeichnet,* dass** der Polymerfilm (4) einen Komplex mit zwei Haftgrundierungsschichten (7) auf der Nutz- (2) und Trägerschicht (3) bildet, die zu beiden Seiten des Polymerfilms angeordnet sind.

7. Mehrschichtstruktur (1) nach Anspruch 6, **dadurch *gekennzeichnet,* dass** die Haftgrundierungsschichten (7) Copolyesterschichten sind.

8. Mehrschichtstruktur (1) nach Anspruch 1, **dadurch *gekennzeichnet,* dass** die Nutzschicht (2) eine Dicke zwischen 0,10 und 1 mm und die Trägerschicht (3) eine Dicke zwischen 0,4 und 6 mm aufweist.

9. Verfahren zur Herstellung einer Mehrschichtstruktur (1) nach Anspruch 1, **dadurch *gekennzeichnet,* dass** das Verfahren die folgenden Schritte umfasst:
- Beschichten und anschließend Gelieren einer der Nutz- (2) oder Trägerschichten (3) auf einer der Seiten eines bedruckten Polymerfilms (4) mit einem Elastizitätsmodul von mehr als 1,5 GPa;
- Beschichten und anschließend Gelieren oder Komplexieren der anderen Träger- (3) oder Nutzschicht (2) auf der anderen Seite des Polymerfilms (4).

## Claims

1. Multilayer structure (1) for the production of a floor covering, the said multilayer structure (1) comprising a top wearing layer (2) which is transparent and a polymer backing layer (3), and a printed polymer film (4) arranged between the wearing layer (2) and the backing layer (3), ***characterized in that*** the printed polymer film (4) has a Young's modulus greater than 1.5 GPa, and ***in that*** the wearing layer (2) is made from polyvinyl chloride and the backing layer (3) is a polyvinyl chloride layer made from gelified plastisol.

2. Multilayer structure (1) according to claim 1, ***characterized in that*** the polymer film (4) is between 50 µm and 300 µm in thickness.

3. Multilayer structure (1) according to claim 1, ***characterized in that*** the polymer film (4) has a stiffness greater than 100 N/mm, and preferably between 100 N/mm and 300 N/mm.

4. Multilayer structure (1) according to claim 1, ***characterized in that*** the polymer film (4) has a Young's modulus of between 1.5 GPa and 5 GPa.

5. Multilayer structure (1) according to claim 1, ***characterized in that*** the polymer film (4) is between a thermoplastic film chosen from between vinyl polychloride, polyethylene terephthalate, methyl polymethacrylate, polyethylene terephthalate glycol, polyphenylene sulfide.

6. Multilayer structure (1) according to claim 1, ***characterized in that*** the polymer film (4) forms a complex with two primary adherence layers (7) to the wearing (2) and backing (3) layers, which are arranged on either side of the polymer film.

7. Multilayer structure (1) according to claim 6, ***characterized in that*** the primary adherence layers (7) are copolyester layers.

8. Multilayer structure (1) according to claim 1, ***characterized in that*** the wearing layer (2) is between 0.10 and 1 mm in thickness and the backing layer (3) is between 0.4 and 6 mm in thickness.

9. A method of manufacturing a multilayer structure (1) according to claim 1, ***characterized in that*** it consists in:
- Coating then gelifying wearing layers (2) or backing layers (3) on one of the faces of a printed polymer film (4) having a Young's modulus greater than 1.5 GPa;
- Coating then gelifying or complexing the other backing (3) or wearing (2) layers on the other side of the polymer film (4).
